# EUROPÄISCHE PATENTSCHRIFT

(11) **EP 2 326 537 B1**
(45) Veröffentlichungstag und Bekanntmachung des Hinweises auf die Patenterteilung: **14.08.2013**
(21) Anmeldenummer: 09782284.5
(22) Anmeldetag: 27.08.2009
(51) Int. Cl.: B60S 1/08

(54) **SENSORANORDNUNG FÜR EIN KRAFTFAHRZEUG**
SENSOR ASSEMBLY FOR A MOTOR VEHICLE
ASSEMBLAGE DE DETECTEURS POUR UN VEHICULE AUTOMOBILE

(30) Priorität: 28.08.2008 DE 102008044839
(43) Veröffentlichungstag der Anmeldung: 01.06.2011
(73) Patentinhaber: Leopold Kostal GmbH & Co. KG, 58513 Lüdenscheid (DE)
(72) Erfinder: KORTAN, Josef, Chysky 398 53 (CZ); BÖBEL, Ralf, 59439 Holzwickede (DE); BLÄSING, Frank, 59457 Werl (DE)
(74) Vertreter: Kerkmann, Detlef
(86) Internationale Anmeldenummer: PCT/EP2009/061077
(87) Internationale Veröffentlichungsnummer: WO 2010/023244

(56) Entgegenhaltungen:
- EP-B1- 1 202 885
- DE-A1-102006 039 065
- DE-B3-102004 032 749
- DE-U1-202006 017 362

## Beschreibung

Sensoranordnung für ein Kraftfahrzeug, mit einem an einer Fahrzeugscheibe befestigbaren Halterahmen, mit einem an den Halterahmen anfügbaren Sensorgehäuse und mit einem verschwenkbar gelagertem Betätigungshebel, wobei das Sensorgehäuse durch Verschwenken des Betätigungshebels federnd an die Fahrzeugscheibe ankoppelbar ist.

Aus der Patentschrift EP 1 202 885 B1 ist eine derartige Sensoranordnung bekannt. Der beschriebene Sensor besitzt zwei hebelartige Befestigungsteile, die durch jeweils ein Blechstanzteil gebildet sind, welches einen federnden Bereich aufweist und mit einem Endabschnitt an jeweils eine taschenförmige Ausformung eines Gehäuseteils des Sensors angefügt ist. Die Befestigungsteile sind um ihre Verbindungsstellen am Gehäuseteil verschwenkbar angeordnet. Die freien Endabschnitte der Befestigungsteile können gegen die Federspannung ihrer federnden Bereiche über Zapfen gedrückt werden, die an einer einen Halterahmen bildenden Befestigungsvorrichtung angeformt sind. Hierdurch wird das Gehäuseteil des Sensors unter Federspannung gegen die Fahrzeugscheibe gepresst. Die hebelartigen Befestigungsteile bilden durch die Anlenkung eines Endabschnitts am Gehäuseteil jeweils einen einarmigen Betätigungshebel aus. Da das Anfügen der Befestigungsteile an die Befestigungsvorrichtung durch eine Kraftbeaufschlagung eines Abschnitts dieses einarmigen Betätigungshebels erfolgt, ist die dazu aufzubringende Montagekraft relativ groß.

Nachteilig ist auch, dass die Montagekräfte direkt auf die relativ kompliziert geformten Befestigungsteile einwirken müssen, die relativ schlecht zu handhaben sind. Außerdem ist es nachteilig, dass bei der bekannten Anordnung mindestens zwei separat zu montierende Befestigungsteile benötigt werden, um eine gleichmäßige Anpressung des Sensors an die Fahrzeugscheibe zu erreichen.

Es stellte sich die Aufgabe, eine einfache und kostengünstige Sensoranordnung zu schaffen, die mit geringem Kraftaufwand an die Fahrzeugscheibe montierbar ist und deren Bestandteile bei der Montage gut handhabbar sind.

Diese Aufgabe wird erfindungsgemäß dadurch gelöst, dass am Halterahmen Spannhaken befestigbar sind, an denen der Betätigungshebel verschwenkbar gelagert ist, und dass der Betätigungshebel durch die Verschwenkung ein das Sensorgehäuse an die Fahrzeugscheibe anpressendes Federelement spannt.

Vorteilhaft ist, dass der schwenkbar angeordnete Betätigungshebel ein sehr komfortabel handhabbares Mittel zur Befestigung des Sensorgehäuses an dem Halterahmen darstellt.

Besonders vorteilhaft ist es, wenn der Betätigungshebel einen zweiarmigen Hebel ausbildet, wobei der zweite Hebelarm durch einen mit der Schwenkachse des Betätigungshebels verbundenen Exzenter gebildet ist, der auf eine mit dem Sensorgehäuse verbundene Blattfeder einwirkt. Hierdurch kann mit der relativ geringen Betätigungskraft am Betätigungshebel eine hohe Anpresskraft des Sensorgehäuses an die Fahrzeugscheibe erreicht werden. Durch die Formgebung des Exzenters und die Ausgestaltung der Blattfeder kann die Anpresskraft genau dosiert und zudem auf einen Maximalwert begrenzt werden. Alternativ kann das Federelement auch durch einen elastisch deformierbaren Abschnitt des Sensorgehäuses ausgebildet sein.

Ebenfalls besonders vorteilhaft ist es, wenn der Betätigungshebel, noch vor dem Anpressen des Sensorgehäuses an die Fahrzeugscheibe, mit dem Halterahmen vorverrastbar ist. Dies wird vorzugsweise dadurch erreicht, dass an den Spannhaken des Betätigungshebels Befestigungsmittel vorgesehen sind, die Hinterschneidungen am Halterahmen hintergreifen. Die Befestigungsmittel können insbesondere als hakenartige Anformungen ausgeführt sein, die mit am Halterrahmen angeformten Nuten oder Zapfen verbindbar sind.

Weitere vorteilhafte Ausgestaltungen und Weiterbildungen der Erfindung gehen aus den abhängigen Ansprüchen und der nachfolgenden Beschreibung von zwei Ausführungsbeispielen anhand der Zeichnung hervor.

Es zeigen
- Figuren 1 bis 4: ein erstes Ausführungsbeispiel eines Sensorgehäuses während verschiedener Montagephasen,
- Figuren 5 bis 8: ein zweites Ausführungsbeispiel eines Sensorgehäuses während verschiedener Montagephasen,
- Figur 9: einen Betätigungshebel,
- Figur 10: die in der Figur 3 dargestellte Sensoranordnung mit einem teilweise entfernten Sensorgehäuse,
- Figur 11: eine Schnittansicht der Figur 10,
- Figur 12: die in der Figur 4 dargestellte Sensoranordnung mit einem teilweise entfernten Sensorgehäuse.

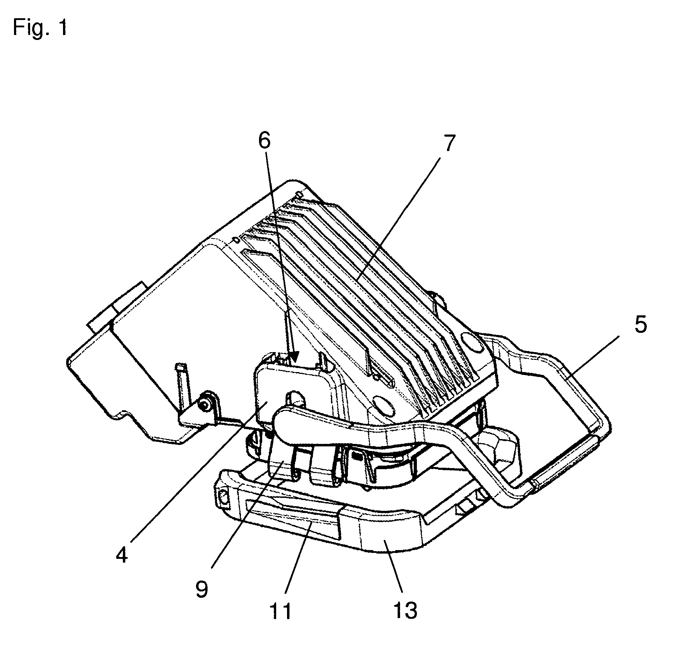

Die Figur 1 zeigt eine Sensoranordnung für ein Kraftfahrzeug mit einem Sensorgehäuse 7, welches an einem Halterahmen 13 befestigbar ist. Dargestellt ist das Sensorgehäuse 7 kurz von dem Anfügen an den Halterahmen 13. Im endmontierten Zustand der Sensoranordnung ist der Halterahmen 13 mit einer hier nicht dargestellten Fahrzeugscheibe verbunden.

Innerhalb des Sensorgehäuses 7 sind hier nicht näher beschriebene elektronische und optische Komponenten angeordnet, wie beispielsweise ein Lichtleitkörper der elektromagnetische Strahlung über einen optischen Koppelkörper in die Fahrzeugscheibe ein- bzw. auskoppelt, sowie ein Schaltungsträger, der elektronische Sensorkomponenten trägt und elektrisch miteinander verbindet. Vorzugsweise enthält das Sensorgehäuse 7 zumindest einen optischen Sensor und zwar insbesondere eine Kamera.

Die mechanische Verbindung zwischen dem Sensorgehäuse 7 und dem Halterahmen 13 wird über zwei aus Metall gefertigten Spannhaken 6 hergestellt, die in Aufnahmetaschen 4 an zwei zueinander parallelen Flächen des Sensorgehäuses 7 eingefügt sind. An den beiden Spannhaken 6 ist ein im wesentlichen u-förmig ausgebildeter Betätigungshebel 5 schwenkbar gelagert. An jedem Spannhaken 6 sind zwei Umgriffe 9 einstückig angeformt, die in Richtung auf das Sensorgehäuse 7 abgewinkelt sind.

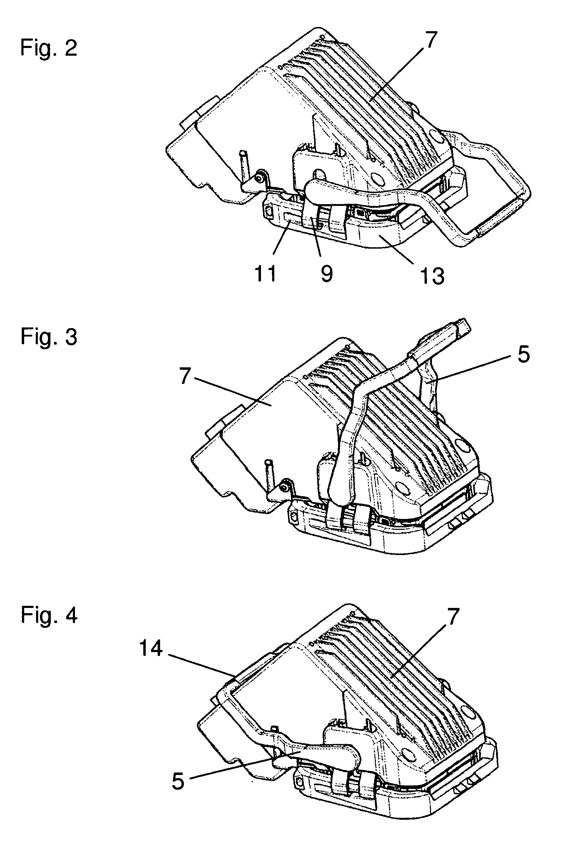

Durch Einsetzen des Sensorgehäuses 7 in den vom Halterahmen 13 umfassten Aufnahmebereich gleiten die Umgriffe 9 über Randabschnitte des Halterahmens 13 und greifen in seitlich an den Halterahmen 13 angeformte Nuten 11 (Figur 2) ein. Damit ist das Sensorgehäuses 7 bereits lose mit dem Halterahmen 13 vorverrastet.

Durch Umlegen des Betätigungshebels 5 über das Sensorgehäuse 7, dargestellt in der Figur 3, wird eine mit dem Sensorgehäuse 7 verbundene Blattfeder gespannt, die das Sensorgehäuse 7 an eine hier nicht dargestellte Fahrzeugscheibe presst.

Hat der Betätigungshebel 5 seine, in der Figur 4 ersichtliche Endposition erreicht, so liegt der abgekröpfte Betätigungsabschnitt 14 des Betätigungshebels 5 dicht an mehreren Außenflächen des Sensorgehäuses 7 an.

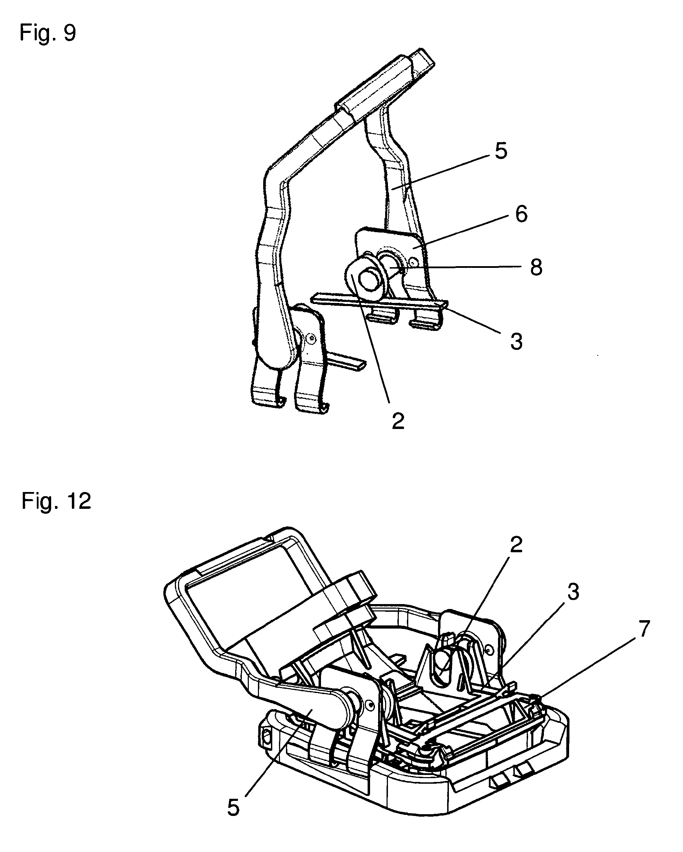

Das Spannen der, in den Figuren 1 bis 4 nicht dargestellten Blattfeder wird durch die Figuren 9 bis 12 verdeutlicht. Die Figur 9 zeigt den Betätigungshebel 5, der an zwei Spannhaken 6 schwenkbar gelagert ist. Die beiden Schwenkachsen 8 des Betätigungshebels 5 sind jeweils mit einem Exzenter 2 verbunden. An jedem Exzenter 2 liegt tangential eine streifenförmige Blattfeder 3 an.

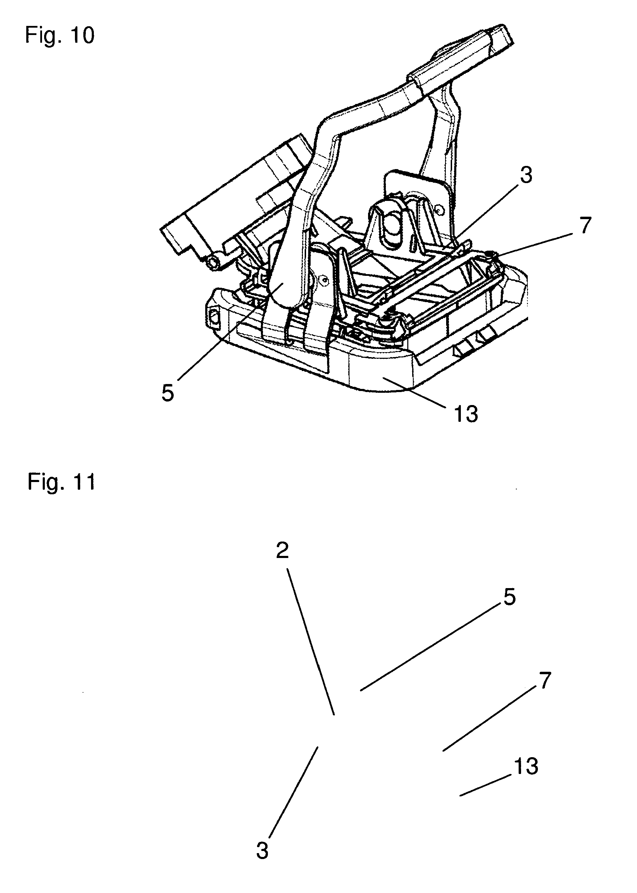

Die hier einzeln dargestellten Blattfedern 3 sind Bestandteile des Sensorgehäuses 7, welches in den Figuren 10 bis 12 jeweils ohne seine Außenflächen, also etwa ohne einen Gehäusedeckel gezeigt ist.

Wie die Figur 10 und besonders deutlich die Schnittansicht der Figur 11 zeigt, sind die Blattfedern 3 horizontal, das heißt parallel zur Ankoppelfläche des Sensorgehäuses 7 an der Fahrzeugscheibe, mit dem Sensorgehäuse 7 verbunden. Der Betätigungshebel 5 befindet sich hier in einer mittleren Schwenkposition. Die beiden Exzenter 2 liegen an jeweils einem mittleren Abschnitt der Blattfedern 3 an. Mit dem Verschwenken des Betätigungshebels 5 vergrößern sich die an den Blattfedern 3 anliegenden Radien der Exzenter 2, so dass die Blattfedern 3 in ihrer Mitte zunehmend gespannt werden. Hierdurch entstehen an den Endabschnitten der Blattfedern 3, an denen diese jeweils mit dem Sensorgehäuse 7 verbunden sind, Federkräfte, die das Sensorgehäuse 7 in Richtung auf die Fahrzeugscheibe pressen.

Die maximalen Radien der Exzenter 2 wirken in der Endstellung des Betätigungshebels, dargestellt in der Figur 12, auf die beiden Blattfedern 3 ein, so dass hier die maximale Anpresskraft auf das Sensorgehäuse 7 erzielt wird. Vorteilhafterweise kann die Form der Exzenter 2 auch so festgelegt sein, dass die Federspannung bereits vor dem Erreichen der Endstellung des Betätigungshebels 5 jeweils ein lokales Maximum annimmt, so dass durch die nachfolgende Entlastung der Blattfedern 3 der Betätigungshebel 5 eine besonders stabile Endstellung einnimmt.

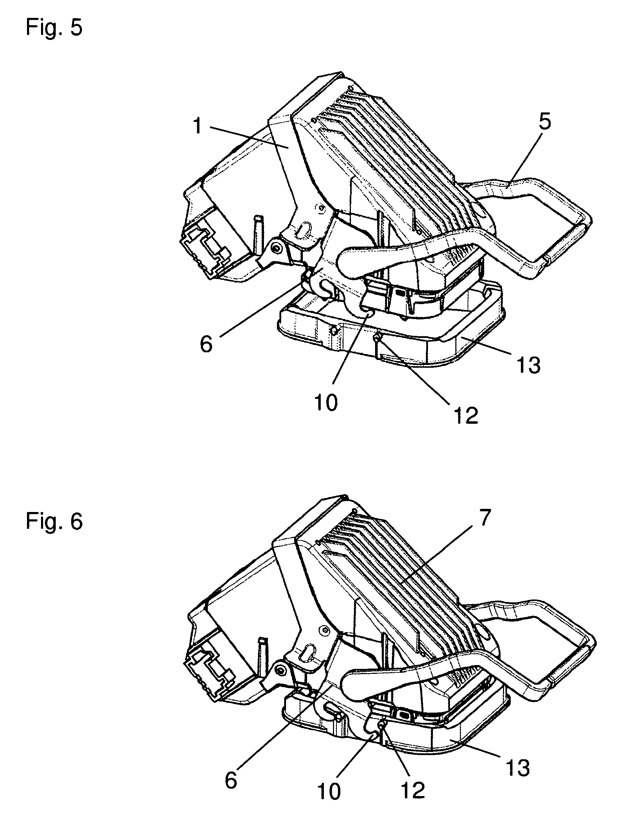

In den Figuren 5 bis 8 ist eine alternative Ausführungsform einer Sensoranordnung dargestellt, wobei gleich oder vergleichbar wirkende Teile mit den gleichen Bezugszeichen bezeichnet sind. Der Unterschied zur oben erläuterten Ausführung liegt vor allem in der Ausgestaltung der Umgriffe 9 an den Spannhaken 6, die hier nicht senkrecht zu den Spannhaken 6 sondern statt dessen in Richtung der Spannhaken 6 abgewinkelt sind. Hierdurch sind die Umgriffe 9 mit Zapfen 12 verbindbar, die am Halterahmen 13 angeformt sind.

Die beiden Spannhaken 6 sind zudem durch einen einstückig angeformten Spannbügel 1 miteinander verbunden, so dass die Anordnung aus Spannhaken 6, Spannbügel 1 und Betätigungshebel 5 bereits eine relativ stabile und gut handhabbare Anordnung bildet, die über das Sensorgehäuse 7 gelegt werden kann.

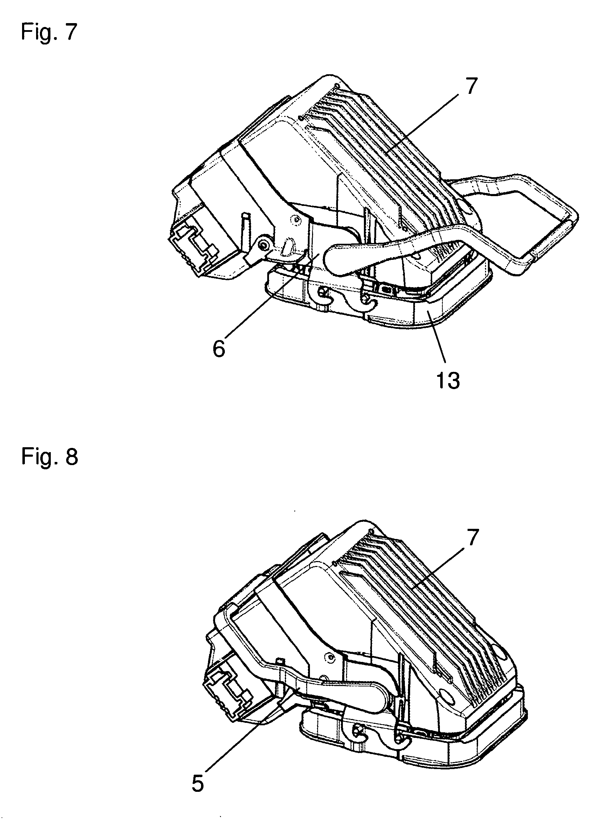

In der Figur 6 ist das Sensorgehäuse 7 bereits lose an den Halterahmen 13 angefügt. Durch eine Kippbewegung des Spannbügels 1 werden die Umgriffe 10 an den Zapfen 12 eingehakt. Wie die Figur 7 zeigt, sind die Spannhaken 6 mit dem Halterahmen 13 vorverrastet und am Halterahmen 13 ausgerichtet. Die Spannbügel 1 liegt an Außenflächen des Sensorgehäuses 7 an. Zusätzliche Befestigungen der Spannhaken 6 am Sensorgehäuse 7, etwa in Aufnahmetaschen 4 (Figur 1), wie bei dem zuvor beschriebenen Ausführungsbeispiel, sind damit nicht mehr erforderlich.

In einem letzten Montageschritt wird der Betätigungshebel 5 in seine in der Figur 8 dargestellte Endposition gebracht, wobei ein mit dem Betätigungshebel 5 verbundener Exzenter 2 auf die bereits beschriebene Weise ein Federelement spannt, wodurch das Sensorgehäuse 7 gegen die Fahrzeugscheibe gepresst wird.

### Bezugszeichen

- 1: Spannbügel
- 2: Exzenter
- 3: Federelement (Blattfeder)
- 4: Aufnahmetaschen
- 5: Betätigungshebel
- 6: Spannhaken
- 7: Sensorgehäuse
- 8: Schwenkachsen
- 9: Umgriffe
- 10: Umgriffe
- 11: Nuten
- 12: Zapfen
- 13: Halterahmen
- 14: Betätigungsabschnitt

## Patentansprüche

1. Sensoranordnung für ein Kraftfahrzeug, mit einem an einer Fahrzeugscheibe befestigbaren Halterahmen (13), mit einem an den Halterahmen anfügbaren Sensorgehäuse (7) und mit einem verschwenkbar gelagertem Betätigungshebel (5), wobei das Sensorgehäuse (7) durch Verschwenken des Betätigungshebels federnd an die Fahrzeugscheibe ankoppelbar ist,
**dadurch gekennzeichnet,**
**dass** am Halterahmen (13) Spannhaken (6) befestigbar sind, an denen der Betätigungshebel (5) verschwenkbar gelagert ist,
und **dass** der Betätigungshebel (5) durch die Verschwenkung ein das Sensorgehäuse (7) an die Fahrzeugscheibe anpressendes Federelement (3) spannt.

2. Sensoranordnung nach Anspruch 1, **dadurch gekennzeichnet, dass** der Betätigungshebel (5) im wesentlichen u-förmig ausgebildet ist.

3. Sensoranordnung nach Anspruch 1, **dadurch gekennzeichnet, dass** das Federelement (3) eine mit dem Sensorgehäuse (7) verbundene Blattfeder ist.

4. Sensoranordnung nach Anspruch 1, **dadurch gekennzeichnet, dass** das Federelement (3) durch einen elastisch deformierbaren Abschnitt des Sensorgehäuses (7) gebildet ist.

5. Sensoranordnung nach Anspruch 1, **dadurch gekennzeichnet, dass** der Betätigungshebel (5) mit einem Exzenter (2) verbunden ist, der bei einer Verschwenkung des Betätigungshebels (5) gegen das Federelement (3) bewegt wird und dadurch das Federelement (3) spannt.

6. Sensoranordnung nach Anspruch 1, **dadurch gekennzeichnet, dass** die Spannhaken (6) Umgriffe (9, 10) oder Laschen ausbilden, die mit dem Halterahmen (13) verbindbar sind.

7. Sensoranordnung nach Anspruch 6, **dadurch gekennzeichnet, dass** die Umgriffe (9) mit Nuten (11) verbindbar sind, die am Halterahmen (13) angeformt sind.

8. Sensoranordnung nach Anspruch 6, **dadurch gekennzeichnet, dass** die Umgriffe (10) oder Laschen mit Zapfen (12) verbindbar sind, die am Halterahmen (13) angeformt sind.

9. Sensoranordnung nach Anspruch 1, **dadurch gekennzeichnet, dass** das Sensorgehäuse (7) zumindest einen optischen Sensor enthält.

10. Sensoranordnung nach Anspruch 9, **dadurch gekennzeichnet, dass** der optische Sensor eine Kamera ist.

## Claims

1. Sensor arrangement for a motor vehicle having a supporting frame (13) which can be affixed to a vehicle windscreen, having a sensor housing (7) which can be appended to the supporting frame, and having an actuating lever (5) that is supported in a swivelling manner, whereby the sensor housing (7) is resiliently connectable to the vehicle windscreen by pivoting the actuating lever,
**characterised in that**
tensioning hooks (6) on which the actuating lever (5) is supported in a pivoting manner can be affixed to the supporting frame (13),
and that, as a result of pivoting, the actuating lever (5) tensions a spring element (3) which presses the sensor housing (7) against the vehicle windscreen.

2. Sensor arrangement according to Claim 1, **characterised in that** the actuating lever (5) is essentially of a u-shaped design.

3. Sensor arrangement according to Claim 1, **characterised in that** the spring element (3) is a leaf spring connected to the sensor housing (7).

4. Sensor arrangement according to Claim 1, **characterised in that** the spring element (3) is formed by an elastically deformable section of the sensor housing (7).

5. Sensor arrangement according to Claim 1, **characterised in that** the actuating lever (5) is connected to an eccentric (2) which is moved against the spring element (3) when the actuating lever (5) is pivoted, thus tensioning the spring element (3).

6. Sensor arrangement according to Claim 1, **characterised in that** the tensioning hooks (6) embody clasps (9, 10) or tabs which are connectable to the supporting frame (13).

7. Sensor arrangement according to Claim 6, **characterised in that** the clasps (9) are connectable to grooves (11) moulded into the supporting frame (13).

8. Sensor arrangement according to Claim 6, **characterised in that** the clasps (10) or tabs are connectable to studs (12) moulded onto the supporting frame (13).

9. Sensor arrangement according to Claim 1, **characterised in that** the sensor housing (7) contains at least one optical sensor.

10. Sensor arrangement according to Claim 9, **characterised in that** the optical sensor is a camera.

## Revendications

1. Arrangement de détection pour un véhicule automobile, avec un cadre de maintien (13), qui peut être fixé sur une glace dudit véhicule automobile, avec un boîtier de détecteur (7), qui peut être joint au cadre de maintien, et avec un levier d'actionnement (5), qui est monté à pivotement, sachant que le boîtier de détecteur (7), peut être couplé sur la glace du véhicule automobile par pivotement du levier d'actionnement élastique,
**caractérisé en ce que**,
sur le cadre de maintien (13), peuvent être fixés des crochets de serrage (6), sur lesquels le levier d'actionnement (5) est monté à pivotement,
et que, par pivotement, le levier d'actionnement (5) tend un élément élastique (3), qui presse le boîtier de détecteur (7) sur la glace du véhicule automobile.

2. Arrangement de détection selon la revendication 1, **caractérisé en ce que** le levier d'actionnement (5) est de forme sensiblement en U.

3. Arrangement de détection selon la revendication 1, **caractérisé en ce que** l'élément élastique (3) est un ressort à lames, qui est relié au boîtier de détecteur (7),

4. Arrangement de détection selon la revendication 1, **caractérisé en ce que** l'élément élastique (3) est formé par une section élastiquement déformable du boîtier de détecteur (7).

5. Arrangement de détection selon la revendication 1, **caractérisé en ce que** le levier d'actionnement (5) est relié à un excentrique (2), qui, lors d'un pivotement du levier d'actionnement (5), meut l'élément élastique (3) et, de ce fait, tend l'élément élastique (3).

6. Arrangement de détection selon la revendication 1, **caractérisé en ce que** les crochets de serrage (6) forment des structures de retenue (9, 10) ou des attaches, qui peuvent être reliées au cadre de maintien (13).

7. Arrangement de détection selon la revendication 6, **caractérisé en ce que** les structures de retenue (9) peuvent être reliées avec des rainures (11), qui sont formées sur le cadre de maintien (13).

8. Arrangement de détection selon la revendication 6, **caractérisé en ce que** les structures de retenue (10) ou les attaches peuvent être reliées à des zapfen (12), qui sont formés sur le cadre de maintien (13).

9. Arrangement de détection selon la revendication 1, **caractérisé en ce que** le boîtier de détecteur (7), contient au moins un détecteur optique.

10. Arrangement de détection selon la revendication 9, **caractérisé en ce que** le détecteur optique est une caméra.
